# EUROPEAN PATENT APPLICATION

(11) **EP 1 870 804 A1**
(43) Date of publication of application: **26.12.2007**
(21) Application number: 06115906.7
(22) Date of filing: 22.06.2006
(51) Int. Cl.: G06F 9/44

(54) **Dynamic software localization**

(71) Applicant: Microsoft Corporation, Redmond WA 98052 (US)
(72) Inventor: Fitzpatrick, Colin c/o Microsoft, Dublin 18 (IE); McQuaid, André c/o Microsoft, Dublin 18 (IE); Lane, John G. c/o Microsoft, Dublin 18 (IE); Abbar, Mohamed, Redmond, WA 98052 (US); Farrell, Terry c/o Microsoft, Dublin 18 (IE)
(74) Representative: Free, Rachel Alder

(57) **Abstract**

Localizing software applications into target languages such as French, Italian, Chinese, etc. is time consuming, expensive and error prone. End users often need to install and operate multiple copies of the same software applications localized into different languages if they need to work in multiple languages. By providing a localization engine with access to information about resources used in a user interface and translations of those resources, on the fly localization of software applications is possible. Context information is stored in the localization database and used to identify appropriate translations of the resources. Run-time context information is obtained from the user interface and/or software application and optionally a context information store. In some examples, target language resource results are presented in tooltip like displays. The translation information is stored in a localization database which in some examples comprises language-pair information whereby source language resources are stored in association with their translations. Methods of forming language pairs are described.

## Description

### TECHNICAL FIELD

This description relates generally to software localization.

### BACKGROUND

Software products, such as applications and operating systems, are often provided in many different human language versions. The process of converting a software product from the initial human language it was provided in to other natural languages is known as 'localisation'. Typically the localisation is done by translating all the string elements within the user interface (Ul) of the product and any other language specific parts (e.g. hotkeys, coordinates, sizes) from a first language, referred to as the source language (e.g. English) into another language (e.g. Italian), referred to as the target language. Once all the language specific parts have been translated, the product is re-built to produce the language specific version for the target language and then tested extensively before it can be shipped to a customer.

This process is time consuming and costly for the software provider. In addition it is disadvantageous from the end user perspective, because end users are required to obtain different language specific versions of a software application for each language that they wish to work in. For example, an end user who is bilingual in French and Italian would need to obtain different copies of the software application localized in either French or Italian.

Typically the translation of strings is performed by a translator who is provided with a table of all the strings in the Ul that require translation with empty cells for insertion of the translated strings. Having inserted the translated strings in the target language, the resultant table is reviewed by a linguistic reviewer, who may be a natural speaker of the target language. However, even after such a review, linguistic errors may still remain because both the translation and review have been done in isolation from the real use of the strings in the software product itself. This may be particularly significant for some languages where the correct translation of a word or phrase for use on a button may be different to the correct translation for use in a title or in a body of text.

In addition, the change in natural language can cause software to 'break'; to fail in some way. This can occur due to a number of technical reasons which can range from a simple dialog needing to be stretched, to software actually crashing. This requires very substantial costs in terms of test and developer engineers.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

Localizing software applications into target natural languages such as French, Italian, Chinese, etc. is time consuming, expensive and error prone. End users often need to install and operate multiple copies of the same software applications localized into different languages if they need to work in multiple languages. By providing a localization engine with access to information about resources used in a user interface and translations of those resources, on the fly localization of software applications is possible. Context information is stored in the localization database and used to identify appropriate translations of the resources. Run-time context information is obtained from the user interface and/or software application and optionally a context information store. In some examples, target language resource results are presented in tooltip like displays. The translation information is stored in a localization database which in some examples comprises language-pair information whereby source language resources are stored in association with their translations. Methods of forming language pairs are described.
In an example, we provide a method of localizing a software application during use of that software application, comprising:
- receiving a user input at a user interface of the software application;
- identifying a source resource associated with the user input and accessing context information associated with the source resource;
- using the context information to access a localisation database to obtain one or more translations of the resource into a target human language, those translations being target resources;
- displaying the one or more target resources at the user interface.
   An example of an apparatus for localising a software application during use of that software application is also given, comprising:

- an input arranged to receive a user input from a user interface of the software application;
- a processor arranged to identify a source resource associated with the user input and to access context information associated with the source resource;
- an interface arranged to access a localisation database using the context information to obtain one or more translations of the resource into a target human language, those translations being target resources;
- an output arranged to output the one or more target resources to the user interface for display.

Preferably the step of using the context information comprises selecting between a plurality of translations of the source resource on the basis of the context information.

Advantageously the context information is accessed from one or more of the software application and pre-specified context information.

Preferably the method further comprises identifying a unique identifier embedded in the source resource and using that unique identifier to obtain a target resource.

For example, the context information comprises one or more of: a class name, a category, a role and an identifier of a member of a suite of software applications.

In some examples the software application is a member of a suite of related software applications where at least some resources are common to each member of the suite.

Preferably the step of accessing the localisation database comprises searching for one or more translations of the same resource in the localisation database using all the accessed context information and, if no translations are found, repeating the search using less of the context information.

Preferably the method comprises using the source resource to obtain the one or more translations and wherein the localisation database is for a language pair such that it comprises stored information about source resources and their associated translations to target resources.

In some examples the localisation database is created using two other localisation databases each for a language pair between the same master source language and a different target language.

In an example the target resources are presented in a pop-up display region for a limited duration.

Furthermore, the method may comprise receiving user input and modifying any of the following features of the pop-up display on the basis of the user input: colour, transparency, borders, size, delay time, kill time, font size, presentation conditional on use of user defined control keys.

In addition, the method may comprise copying contents of the pop-up display onto an electronic clipboard.

In some examples the processor is arranged to use the context information to enable selection between a plurality of translations of the source resource.

For example, the processor is arranged to access the context information from one or more of the software application and pre-specified context information.

In some cases the processor is arranged to identify a unique identifier embedded in the source resource and the user interface is arranged to use the unique identifier to obtain a target resource.

Preferably the processor and interface are arranged to search for one or more translations of the source resource in the localisation database using all the context information and, if no translations are found, to repeat the search using less of the context information.

In some examples the apparatus comprises one or more localisation databases, each being for a language pair comprising stored information about source resources and their associated translations to target resources.

Another example provides a computer program comprising computer program code means adapted to perform all the steps of any of the methods described above when said program is run on a computer. For example, the computer program is embodied on a computer readable medium.

This acknowledges that software can be a valuable, separately tradable commodity. It is intended to encompass software, which runs on or controls "dumb" or standard hardware, to carry out the desired functions, (and therefore the software essentially defines the functions of the localisation system, and can therefore be termed a localisation system, even before it is combined with its standard hardware). For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of an apparatus for localizing a software application;
FIG. 2 is a flow diagram of a method of localizing a software application;
FIG. 3 is a schematic diagram of another example of an apparatus for localizing software;
FIG. 4 is a flow diagram of another method of localizing a software application;
FIG. 5 is an example of information stored in a localization database;

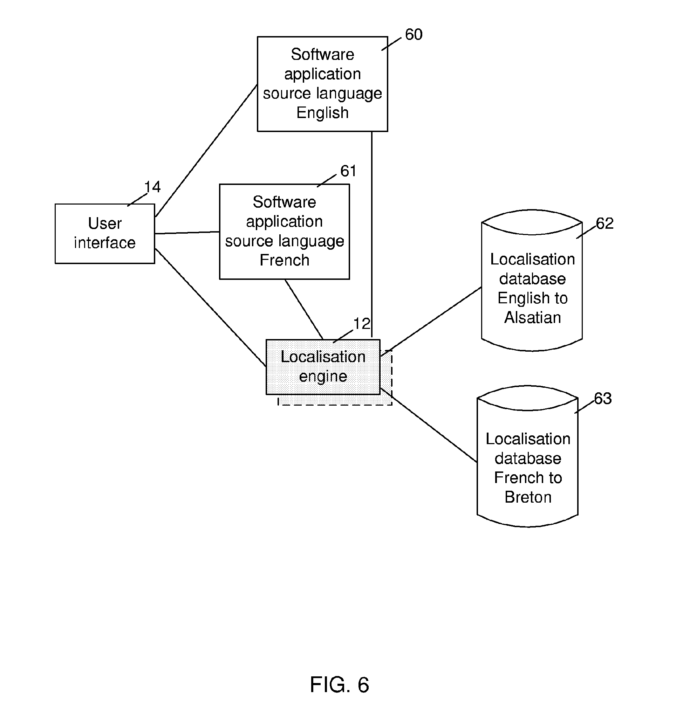

FIG. 6 is a schematic diagram of a system for localizing a plurality of software applications;

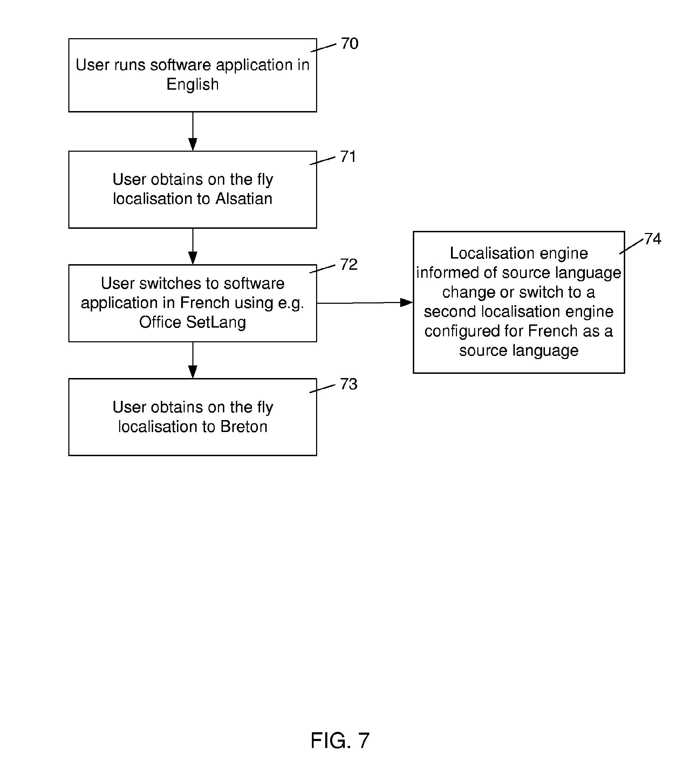

FIG. 7 is a flow diagram of a method of localizing a plurality of software applications using the system of FIG. 6;

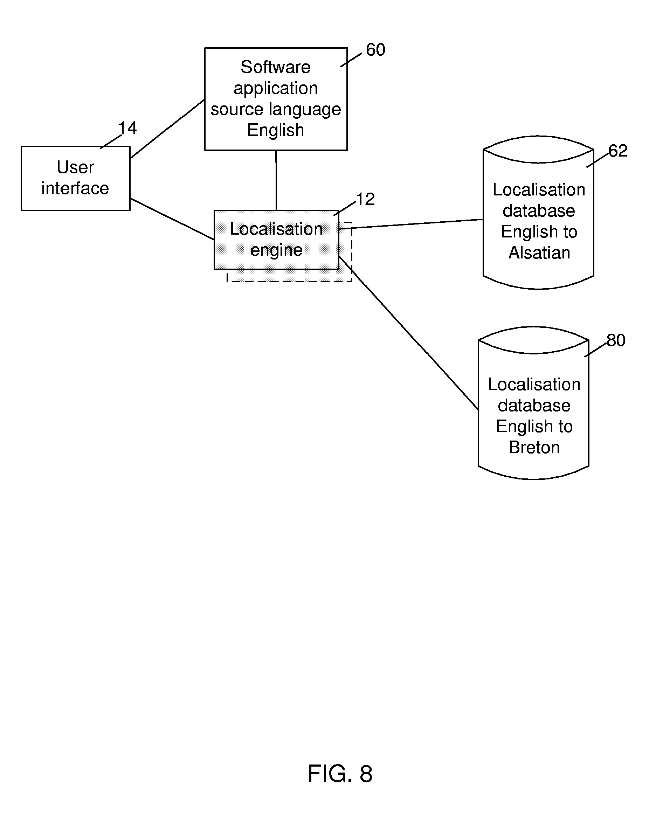

FIG. 8 is a schematic diagram of a system for localizing a software application into a plurality of languages;

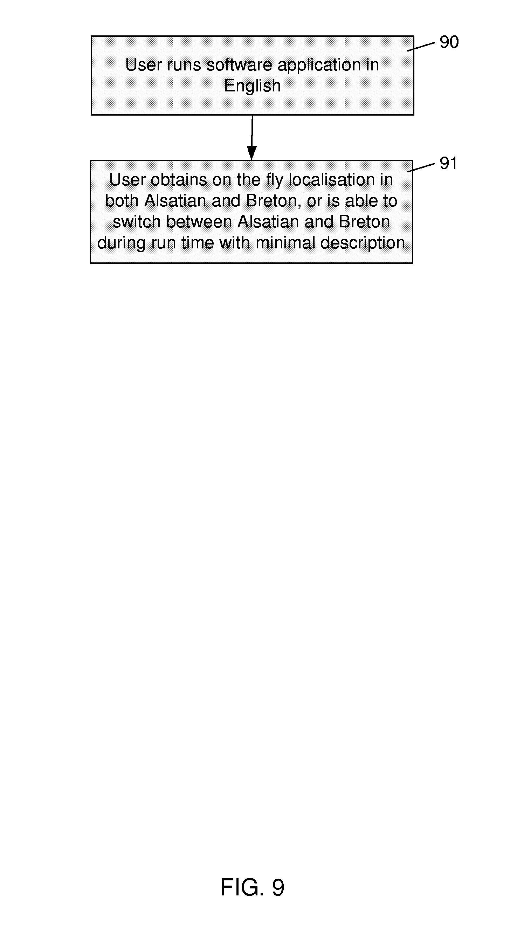

FIG. 9 is a flow diagram of a method of localizing a software application into a plurality of languages using the system of FIG. 8;
FIG. 10 is a schematic diagram indicating a method of forming language pairs;

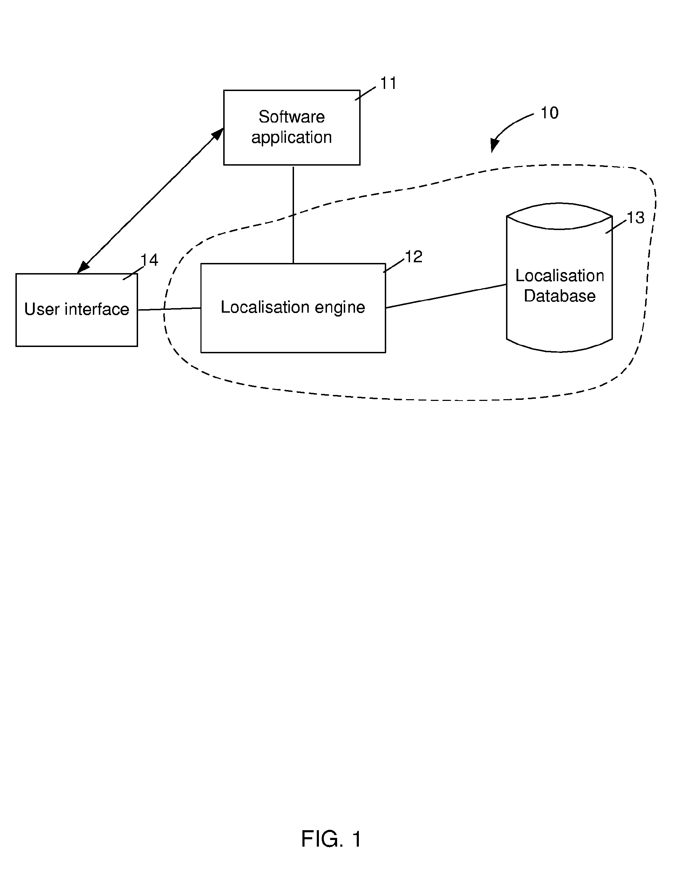

FIG. 1 is a schematic diagram of part of a user interface.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different

### examples.

FIG. 1 is a schematic diagram of an apparatus 10 for localizing a software application 11 in such a way that the localization is achieved dynamically or on-the-fly. The apparatus comprises a localization engine 12 and a localization database 13. These may be integral with one another or provided separately and in communication. For example, the localization database 13 can be provided on a network server or web server and the localization engine 12 may be provided on a user's personal computer (PC) together with the software application 11. However, this is not essential. The localization engine and localization database can be provided at any suitable location provided data can be transferred between them. The localization engine 12 is able to receive information about user inputs or actions at a user interface 14 provided by the software application 11. The user interface 14 may be integral with the software application 11. The user interface may be a graphical user interface (GUI) or any suitable type of user interface which presents resources to users in a source language associated with the software application 11. Resources are strings, symbols, characters, images, audio outputs, video clips, or other data items which are specific to a source language such as American English and may need to be translated in order to be appropriate for a target language such as Italian or Chinese.

The software application of FIG. 1 may be a suite of software applications such as Microsoft Office (trade mark) or any other suite of software applications where resources are often common between the members of the suite.

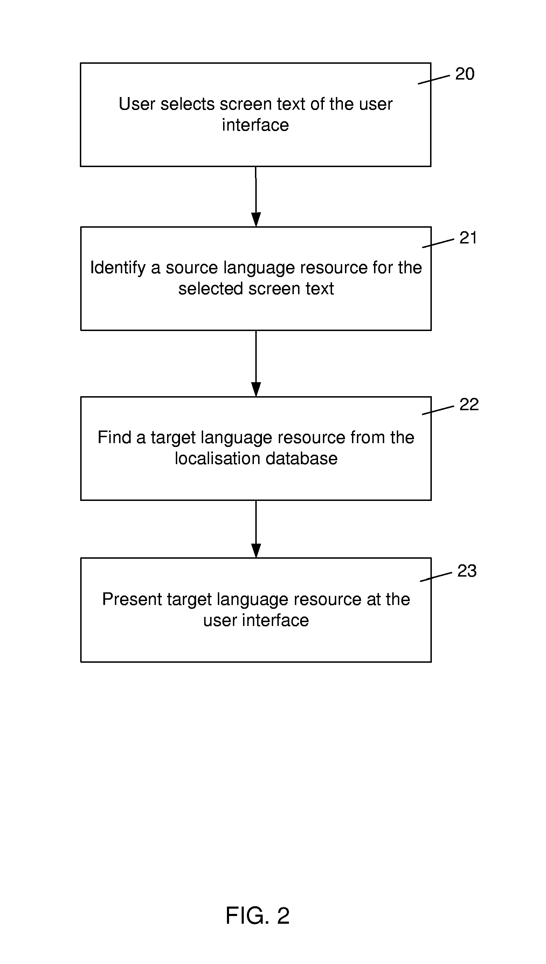

FIG. 2 is a flow diagram of a method of using the apparatus of FIG. 1 to localize the user interface 14 of the software application 1 1 on-the-fly. A user selects a resource presented on the user interface 14 (see box 20). For example, this resource comprises screen text in a source language (say American English). For example, the user might point a mouse to a region of a display screen which is currently displaying a menu listing a plurality of different options. Suppose that the user points his or her mouse to select a menu item comprising the screen text "CLOSE" on a FILE menu. The localization engine 12 receives information about the user input and identifies the associated source language resource for the screen text "CLOSE" (see box 21). For example, in one embodiment this is achieved by using Windows Accessibility (trade mark) which provides information about resources selected by a user, for example, by pointing a cursor at the resource. However, it is not essential to use Windows Accessibility (trade mark) any suitable method for identifying the selected source language resource can be used.

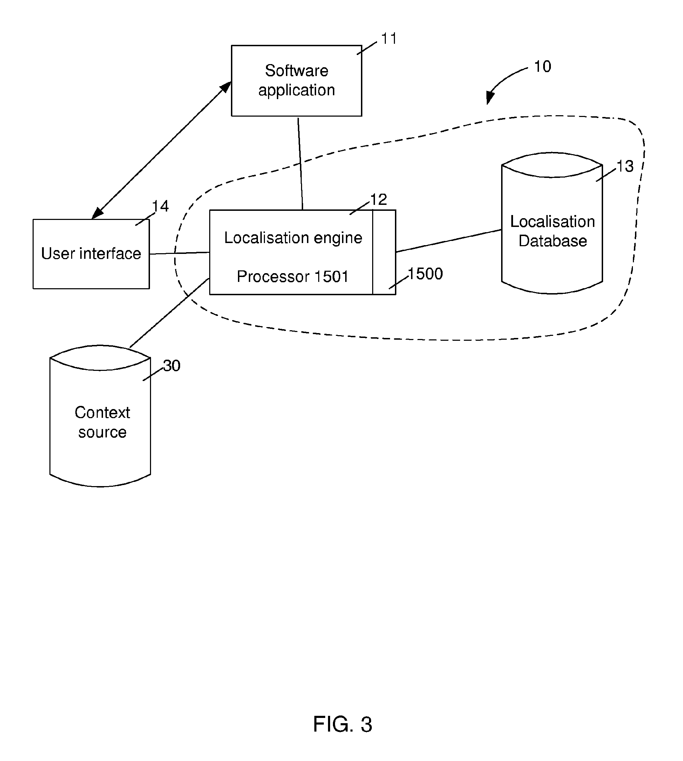

The localization engine finds a target language resource associated with the source language resource, from the localization database (see step 22). In some embodiments the localization database comprises language pair information. This comprises details of a target language resource for each listed source language resource in the localization database. However, this is not essential. In other embodiments, the localization database comprises target language resources each having a unique identifier, such that language-pair information is not essential. In that case, the localization engine is arranged to use the unique identifiers to access the appropriate target language resources. The localization database additionally comprises context information associated with the target and/or source language resources in the localization database. This is described in more detail below with reference to FIG. 3. Returning to FIG. 2, the localization engine, having found an appropriate target language resource for the selected text, presents this at the user interface 23 or outputs that information in any suitable manner. In some embodiments the target language resource is presented using a tooltip or pop-up display. A tooltip display is a balloon or bubble that is presented close to a screen cursor when a user positions the screen cursor over a user interface item such as a menu command. The balloon or bubble is often displayed for a limited duration for example as a pop-up. By using tooltip like displays a quick and simple manner of presenting the localized resource is provided that is easy to use and familiar to users already acquainted with tooltips. In addition, problems with overwriting or obscuring other parts of the user interface display are avoided because the tooltips are displayed for a limited duration. However, it is not essential to use tooltips or pop-ups. The target language resource may be presented by overwriting the on screen resource concerned for a limited duration, or by presentation in a separate window, dialog, or dedicated user interface display region. In the case that tooltips are used it is not necessary to turn off any existing tooltips in the application.

From FIG. 1 it can be seen that it is not necessary to make any changes to the software application 11. This is advantageous because users are able to retain their existing software applications and use those in conjunction with the localization engine 12. Also, end users do not need to operate multiple copies of the software application each localized in a different language. Instead, a single software application can be localized into different languages simply by accessing appropriate localization databases 13. This is advantageous for software providers also, because the need to localize and test software applications is reduced.

Linguistic errors sometimes occur when software products are localized because the translation of resources may be done in isolation of the real use of the resources in the software product itself. For example, a particular string (e.g. 'File') in English may be used in several places in a software product's user interface (e.g. on a menu, a button and a tooltip) and another language may require one or more different translations dependent upon the particular use of the string. Thus we use context information to appropriately identify a target resource from the localization database 13.

The localization database comprises a target language resource for all or at least most of the source language resources. There may be several entries for the string "File" according to the different contexts in which that string is used in the user interface. In some examples context information is also stored in the localization database and is associated with the target language resources. By using context information it is then possible to access appropriate target language resources from the database in the case that two or more translations exist for a particular resource. In other example, the context information is not explicity stored; rather a unique ID is associated with each target language resource and this unique ID captures context information.

FIG. 3 shows another example of an apparatus for localizing software applications on the fly. It is the same as FIG. 1 but also shows a context information source 30 accessible to the localization engine 12. The localisation engine comprises a processor 1501 and an interface 1500 to the localisation database 13. There may be more than one context information source. The context information source 30 is a store of context information associated with resources of the software application user interface. The context information is obtained in advance, for example, from information provided by developers of the software application and/or by pre-processing and automatic analysis of the software application's user interface. For example, pre-processing and automatic analysis produces details of each user interface element and associates an accessibility role with each. Examples of accessibility roles comprise static text, text, push button, check button, radio button and combo box.

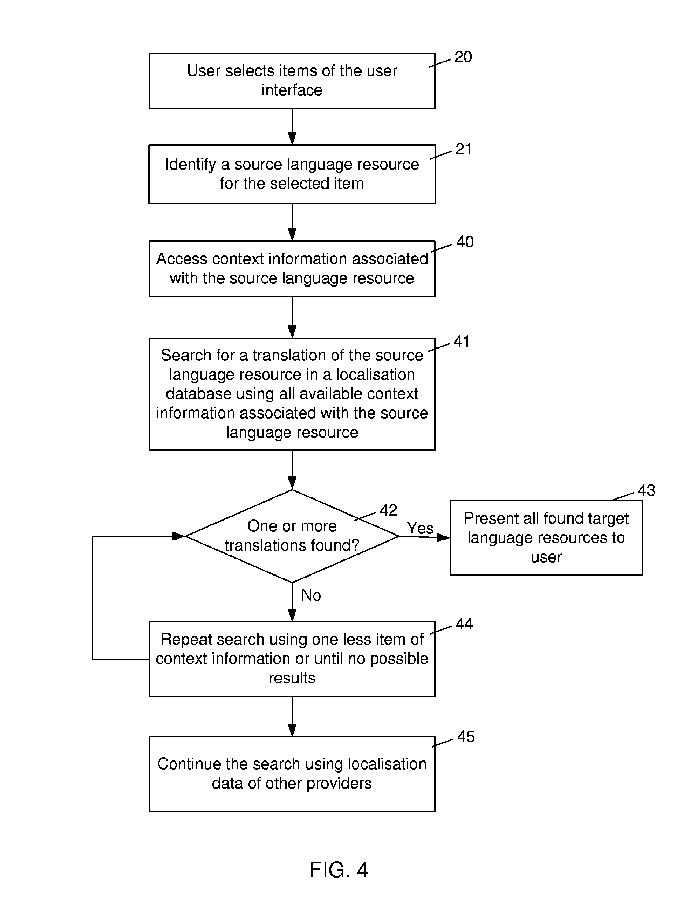

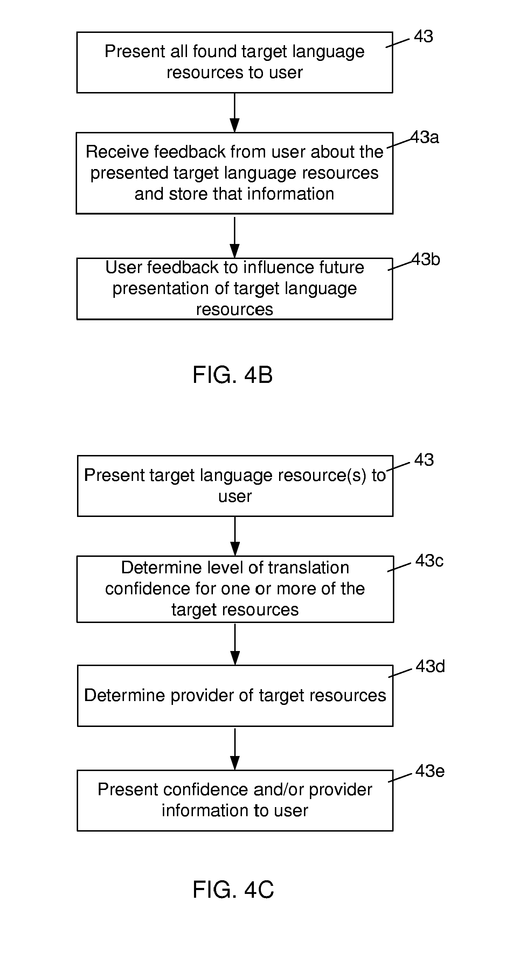

The apparatus of FIG. 3 may be used to localize the user interface as now described with reference to FIG. 4. The user selects some screen text for example in the user interface (see box 20) and a source language resource is identified for the selected text (see box 21). The localization engine 12 accesses context information from the context source 30 associated with the source language resource (see box 40). The localization engine may additionally or alternatively access context information from the software application and user interface themselves. For example, class names obtained from the user interface via Windows^{™} accessibility can be used to identify a category such as menu, dialog, radio button etc. That is, the accessibility component of an underlying operating system may be used to gain run-time contextual information. For example, an API of the accessibility component is used to return accessibility role information and/or class name information of a user element currently found beneath a mouse pointer or of the last user interface element to receive focus. The localisation engine proceeds to attempt to retrieve one or more target language resources from the localization database 13 on the basis of the context information.

In one example, the retrieval mechanism comprises first using all the available "run time" context information to query the localization database (see box 41). The term "run time context information" is used here to refer to that context information obtained from the context information sources 30 and/or the software application during the localization process. In contrast, the context information in the localization database is pre-configured. If, one or more translations are found (see box 42) then the target language resources are presented to the user (see box 43). If no translations (target language resources) are found then the search is repeated using one less item of context information (see box 44). This process repeats until either a search is successful (see box 43) or until there is no possibility of any results in the localization database (see box 44). In the latter case, it is then optionally possible to continue the search using localization data of other providers (see box 45).

The process of presenting the target language resources to the user (box 43) may optionally be linked with a user feedback process. FIG. 4b illustrates the step of presenting all the found target language resources to a user. Feedback is then retrieved from a user about the presented target language resources (see box 43a) and this information is stored. The feedback information is used (by the localization engine and/or the localization database) to influence future presentation of target language resources. For example, a user is able to mark the most appropriate target resource as a default. In that case, the default resource may be presented first or alone the next time the user requires the same source resource to be translated given the same contextual position.

In the case that user feedback is requested this can be (but not the only option) via a hyperlink in a pop-up display showing the target resources. Clicking on the hyperlink is arranged to send an event to the localization engine to enable the feedback information to be taken into account in future. The feedback information may comprise weightings applied to particular target resources, those weightings being stored in any suitable location, such as the localization database.

In another example, the system presents additional information in conjunction with the identified target language resource(s). For example, the additional information comprises an indication of a confidence level for the target resource and/or information about a provider of the target resource. This is illustrated in FIG. 4c. The target language resource(s) to be presented to the user are identified and the localization engine or localization database determines a level of translation confidence for each of the target language resources (see box 43c). The provider of the target language resources can be identified (see box 43d) and the additional information presented to the user (see box 43e). In the case of translation confidence, if only one target language resource is found then the degree of translation confidence is high. Where a plurality of translation results are found the context information associated with each result is used to determine a translation confidence value. For example, pre-specified weights are given to different types of context information. Also, where partial resource matches are found, not exactly matching the source resource, the confidence may be lower. For example, the strings 'File' and 'File...' are very similar but can have different meanings. In the case that both results (target resources) are found, less confidence is indicated in the translation result.

If the translation is obtained from an external provider then interfaces to the provider are arranged such that the provider is able to give translation confidence information with its translations. Information as to the type of provider can also be given.

The additional information (such as translation confidence and provider type) is presented to the user in any suitable way. For example, using colour, symbols, percentages, numbers, graphics, etc.

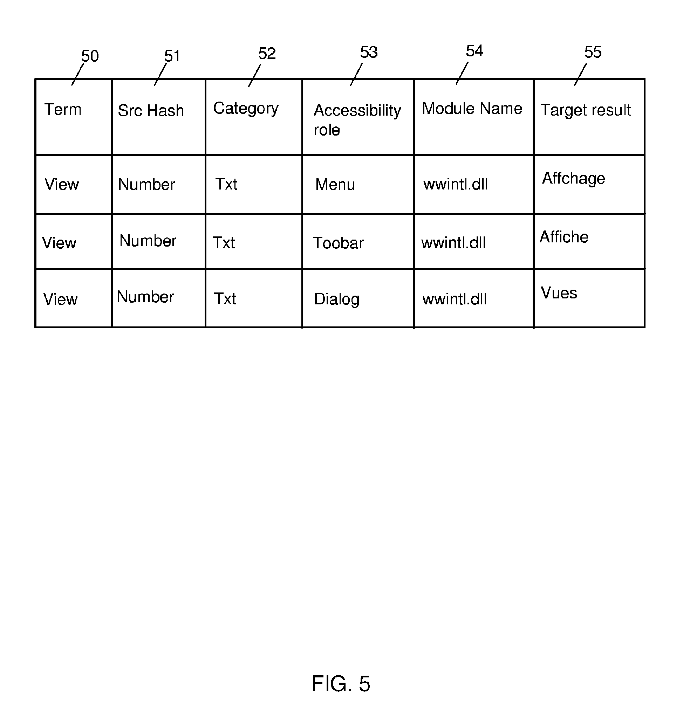

The localization database 1 3 can be arranged to store the target resources and context information in a variety of different ways. Also, in some examples it stores source language resources as well. FIG. 5 shows one possible example of information stored in the localization database.

FIG. 5 shows a table having rows representing information about a given source resource - target resource pair. In the example given each of the source resources comprises the term "View" (see column 50) but the target resource is different in each case (see column 55). A column 51 is used to store a source hash or other identifier for each source resource represented by the text 'number' in FIG. 5 for clarity. A column 52 is used to store information from a first context source 30 (see FIG. 3) which in this example comprises resource category information such as whether the resource comprises text, audio, image, or other types of data. Examples of categories comprise: text, menu item, static text, dialog title, button, check box, error message, list box, radio button, dialog item, group box and custom control. Another column 53 is used to store information from a second context source which in this example comprises accessibility role information. This information indicates the type of user interface item with which the source resource is associated. For example, menu, toolbar, dialog, radio button, tooltip, etc. Another column 54 is used to store context information obtained directly from the software application and/or user interface itself. For example, this information comprises a module name indicating a particular module of the software application that the source resource is associated with. In the case that the software application comprises a suite, the module might be Microsoft Word (trade mark) or Microsoft Excel (trade mark). The information shown in FIG. 5 is example information only. Any suitable additional types of context information can be used or different types and combinations of context information suitable for use in identifying appropriate target resources.

The category information indicated in FIG. 5 may be similar to the role information although the sources of this information are different. Because the sources are different it is sometimes possible that, for example, the role information is not available whereas the category information is. We therefore optionally access both sources of information.

### Pre-processing of source resource and/or target resource

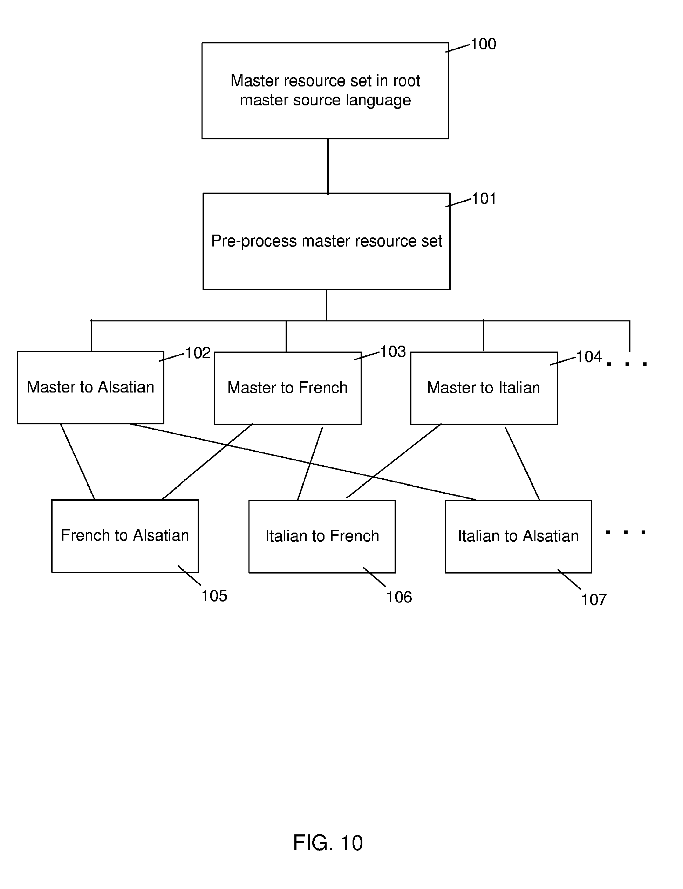

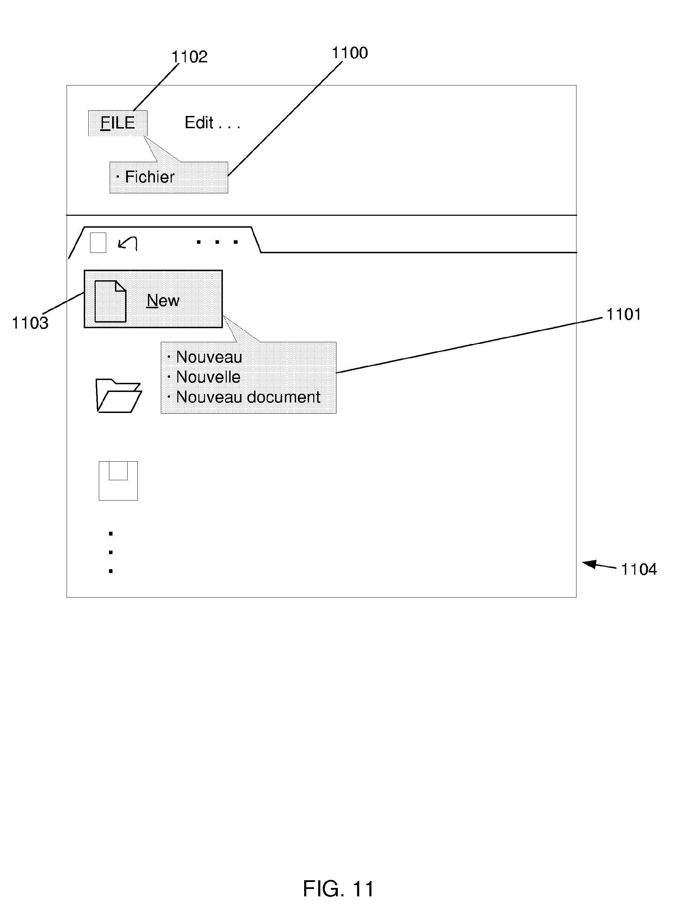

As mentioned above with reference to FIG. 10 a pre-processing step can be carried out on the source language resources stored in the localization database. For example, dummy hotkeys (i.e. hotkeys which are added to a resource rather than being a pre-existing part of that resource) are removed. Pre-processing may also comprise removing resources that are rarely or never used in the user interface concerned in order to reduce complexity and translation costs. For example an automated process using heuristic analysis is used to remove resources that occur rarely in the user interface to be localized. In some situations, historical information is available about use of the user interface 14. This historical information can be used to prioritize or rank the source resources in terms of historical frequency of use or other criteria. For example, it is often the case that end users view menus and toolbars much more than error messages. The source resources can be pre-processed in this manner such that low priority resources may not be translated or may be translated using machine translation methods.

In the case that pre-processing is carried out, the run-time source language resources input to the localization process are also pre-processed in the same manner as the source language resources stored in the localization database.

### Display for presenting target language resources

In some examples a tooltip display or pop-up display is used for presenting the target language resources. In that case, the display may have properties that may be configured by the user via the user interface. For example, colours used in the display, transparency, borders and default size of the display. Other user configurable properties optionally comprise a delay time between user selection of a user interface item and presentation of the tooltip or pop-up display; a kill time or duration for which tooltip or pop-up displays are to be presented; ability to only show localization tooltips when using user-defined control keys; and ability to enlarge the font used in localization tooltips. The kill time setting is useful to enable a user to specify how long a tooltip displays for before hiding. It is especially useful for users who need to take some time to read a tooltip. The ability to only show localization tooltips when using user-defined control keys is advantageous when users become familiar with many of the translations shown and require to only show translations in some cases. For example, the CTRL key (or any other defined key) could be used to identify those cases where translations are required. Users may hold down the CTRL key (for example) and then select the resource to be translated. This is useful for resources the user does not use regularly but still requires to have translated occasionally. In another example, the contents of the tooltip or pop-up display are arranged such that they may be copied onto an electronic clipboard.

FIG. 1 1 is a schematic diagram of part of an example user interface display 1104. It shows two pop-up displays 1100, 1101 used to present target resources. These pop-up displays are not necessarily presented at the same time. In this example, a user has selected a FILE menu 1102 from a task bar and a pop-up display 1100 gives a translation of the word FILE into French. The user also selects an icon 1103 with associated screen text NEW. A pop-up display 1101 presents three possible translations of the term NEW into French.

In order to enable a user to configure features of the pop-up display or other display of the target resources, the localization engine optionally has its own user interface. It is also possible for this user interface to be provided as part of the user interface of the software application.

In another embodiment, the software application 1 1 (see FIG. 3) is configured with unique identifiers embedded in or linked to the source resources. These unique identifiers may be transparent to the end user of the user interface 14 but are accessible by the localization engine 12. In this case the localization database may comprise only information about the target resources rather than having source-target resource pairs as in the FIG. 5 example. The localization database has information about the unique identifiers such that a unique identifier can be used to access an appropriate target resource from the localization database 13.

A method of authorized software application list verification is optionally used to ensure that the localization engine 12 only carries out localization for authorized software. The localization engine is arranged to check a list of authorised software before proceeding to operate with a given software application 11 .

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art.

## Claims

1. A method of localizing a software application (11) during use of that software application, comprising:
(i) receiving a user input at a user interface (14) of the software application;
(ii) identifying a source resource associated with the user input and accessing context information associated with the source resource;
(iii) using the context information to access a localisation database (1 3) to obtain one or more translations of the resource into a target human language, those translations being target resources;
(iv) displaying the one or more target resources at the user interface (14).

2. A method as claimed in claim 1 wherein said step of using the context information comprises selecting between a plurality of translations of the source resource on the basis of the context information.

3. A method as claimed in claim 1 or claim 2 wherein said context information is accessed from one or more of the software application (11) and pre-specified context information.

4. A method as claimed in claim 1 which further comprises identifying a unique identifier embedded in the source resource and using that unique identifier to obtain a target resource.

5. A method as claimed in claim 2 or claim 3 wherein the context information comprises one or more of: a class name, a category (52), a role (53) and an identifier of a member of a suite of software applications.

6. A method as claimed in any preceding claim, wherein the software application is a member of a suite of related software applications where at least some resources are common to each member of the suite.

7. A method as claimed in any of claims 2, 3, 5 or 6 wherein the step of accessing the localisation database comprises searching for one or more translations of the same resource in the localisation database using all the accessed context information and, if no translations are found, repeating the search using less of the context information.

8. A method as claimed in any preceding claim which comprises using the source resource to obtain the one or more translations and wherein the localisation database is for a language pair such that it comprises stored information about source resources and their associated translations to target resources.

9. A method as claimed in claim 8 wherein the localisation database is created using two other localisation databases each for a language pair between the same master source language and a different target language.

10. A method as claimed in any preceding claim wherein the target resources are presented in a pop-up display region (1100, 1101) for a limited duration.

11. A method as claimed in claim 10 which further comprises receiving user input and modifying any of the following features of the pop-up display on the basis of the user input: colour, transparency, borders, size, delay time, kill time, font size, presentation conditional on use of user defined control keys.

12. A method as claimed in claim 10 or claim 1 1 which further comprises copying contents of the pop-up display onto an electronic clipboard.

13. An apparatus for localising a software application (11) during use of that software application comprising:
(i) an input arranged to receive a user input from a user interface (14) of the software application;
(ii) a processor (1 501) arranged to identify a source resource associated with the user input and to access context information associated with the source resource;
(iii) an interface (1 500) arranged to access a localisation database using the context information to obtain one or more translations of the resource into a target human language, those translations being target resources;
(iv) an output arranged to output the one or more target resources to the user interface (14) for display.

14. An apparatus as claimed in claim 13 wherein the processor is further arranged to use the context information to enable selection between a plurality of translations of the source resource.

15. An apparatus as claimed in claim 13 or claim 14 wherein the processor (1501) is arranged to access the context information from one or more of the software application (11) and pre-specified context information (30).

16. An apparatus as claimed in claim 13 wherein the processor is arranged to identify a unique identifier embedded in the source resource and wherein the user interface (14) is arranged to use the unique identifier to obtain a target resource.

17. An apparatus as claimed in any of claims 13 to 1 5 wherein the processor (1501) and interface (1500) are arranged to search for one or more translations of the source resource in the localisation database (13) using all the context information and, if no translations are found, to repeat the search using less of the context information.

18. An apparatus as claimed in any of claims 1 3 to 1 5 or 17 which further comprises one or more localisation databases, each being for a language pair comprising stored information about source resources and their associated translations to target resources.

19. A computer program comprising computer program code means adapted to perform all the steps of any of claims 1 to 12 when said program is run on a computer.

20. A computer program as claimed in claim 19 embodied on a computer readable medium.
